# EUROPEAN PATENT APPLICATION

(11) **EP 2 068 573 A1**
(43) Date of publication of application: **10.06.2009**
(21) Application number: 08715160.1
(22) Date of filing: 06.03.2008
(51) Int. Cl.: H04Q 7/22, H04Q 3/00, H04Q 3/545, H04M 3/42, G06F 17/30

(54) **METHOD, DEVICE AND SYSTEM FOR PROCESSING TERMINAL IDENTIFICATION CARRIED INFORMATION IN COMMUNICATION NETWORK**

(30) Priority: 09.03.2007 CN 200710073470
(71) Applicant: Huawei Technologies Co., Ltd., Longgang District, Shenzhen Guangdong 518129 (CN)
(72) Inventor: FAN, Zhijian, Guangdong 518129 (CN)
(74) Representative: Gulde Hengelhaupt Ziebig & Schneider
(86) International application number: PCT/CN2008/070424
(87) International publication number: WO 2008/110095

(57) **Abstract**

A method for processing terminal identifier portability information in a communication network includes: the message sender sends a first message to the message transferor; if the first message carries a ported called terminal identifier, the message transferor adds terminal identifier portability information to the first message to generate a second message, and sends the second message to the message receiver. Moreover, an apparatus and system for processing terminal identifier portability information in a communication network are disclosed. With the present invention, when the message transferor transfers a message between the message sender and the message receiver, the terminal identifier portability information is added to the transferred message; according to the terminal identifier portability information, the message receiver knows the terminal identifier portability state of the user.

## Description

### Field of the Invention

The present disclosure relates to terminal identifier portability in a communication network, and in particular, to a method, apparatus and system for processing terminal identifier portability information in a communication network.

### Background of the Invention

User number portability means: when a user migrates between different communication networks (between communication networks of different operators or between different communication networks of the same operator), the user number obtained by the user in the a communication network can be ported to and used continuously in the another communication network; and other users may continue calling this user or performing other communication services according to the ported user number.

The conventional technology specifies a solution to supporting user number portability. The number portability solution in the conventional technology is implemented through an Any Time Interrogation (ATI) message. When the message receiver requires the number portability information of the user, the message receiver sends an ATI message to the message transferor. After receiving the ATI message, the message transferor searches the Number Portability Database (NPDB) for the number portability information, and then sends an ATI response to the message receiver, where the ATI response carries the number portability information.

In the process of implementing the present invention, the inventor finds that: according to the above number portability solution, the message receiver needs to initiate a query to the message transferor actively when needing the number portability information of the user, which increases the message interactions between the message receiver and the message transferor, increases the performance overhead of the message receiver and message transferor, and reduces the system performance.

### Summary of the Invention

The present disclosure provides a method, apparatus and system for processing terminal identifier portability information in a communication network to reduce the performance overhead of the message transferor and message receiver and improve the system efficiency.

A method for processing terminal identifier portability information in a communication network in an embodiment of the present disclosure includes:
receiving, by a message transferor, a first message sent by a message sender, and
by the message transferor, adding terminal identifier portability information to the first message to generate a second message when the first message carries a ported called terminal identifier, and sending the second message to a message receiver.

An apparatus for processing terminal identifier portability information in an embodiment of the present disclosure includes:
a message receiving module, adapted to receive a first message;
an identifier portability database, adapted to store a correspondence between the called terminal identifier and the called terminal identifier portability information;
a message processing module, adapted to: search the terminal identifier portability database for the terminal identifier portability information according to the called terminal identifier in the first message, and add the terminal identifier portability information to the first message to generate a second message; and
a message sending module, adapted to send the second message.

A system for processing terminal identifier portability information in a communication network in an embodiment of the present disclosure includes:
a message transferring apparatus, adapted to: receive a first message sent by a message sending apparatus, add the terminal identifier portability information to the first message to generate a second message, and send the second message; and
a message receiving apparatus, adapted to receive the second message.

### Brief Description of the Drawings

Figure 1 shows the composition of a system for processing terminal identifier portability information in an embodiment of the present disclosure;

Figure 2 is a flowchart where a message transferring apparatus processes terminal identifier portability information in an embodiment of the present disclosure;

Figure 3 shows structure of a message transferring apparatus in an embodiment of the present disclosure;

Figure 4(a) shows a structure of a message processing module in an embodiment of the present disclosure;

Figure 4(b) shows a structure of a message processing module in another embodiment of the present disclosure;

Figure 5 is an SMS flowchart in an embodiment of the present disclosure; and

Figure 6 is a voice call service flowchart in an embodiment of the present disclosure.

### Detailed Description of the Intention

The present disclosure is hereinafter described in detail with reference to embodiments and accompanying drawings.

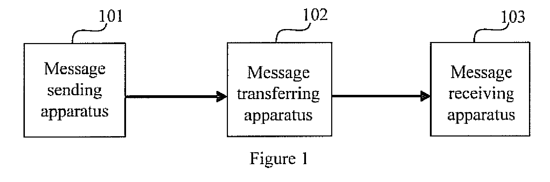

An embodiment of the present disclosure may be implemented through a system shown in Figure 1. The system may includes:
a message sending apparatus 101, adapted to send a message which is subsequently transferred through a message transferring apparatus 102 to a message receiving apparatus 103;
the message transferring apparatus 102, adapted to receive the message sent by the message sending apparatus 101, process the received message with the terminal identifier portability information and forward the message processed to the message receiving apparatus 103; and
the message receiving apparatus 103, adapted to receive the message forwarded by the message transferring apparatus 102.

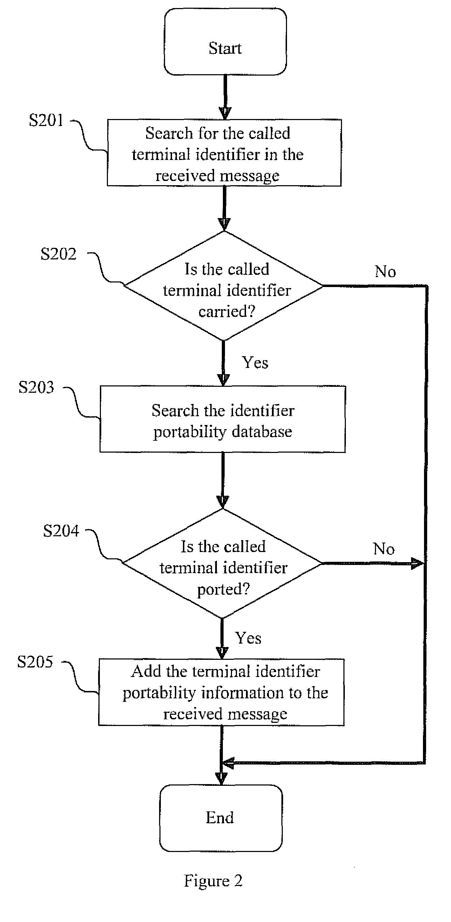

In an embodiment of the present disclosure, the message transferor may process a received message according to the process shown in Figure 2:

Block S201: The message transferor checks the received message, and obtains the called terminal identifier carried in the received message.

Block S202: If the received message carries no called terminal identifier, the process is ended; otherwise, the process proceeds to Block S203.

Block S203: The message transferor searches the terminal identifier portability database for the terminal identifier portability information according to the called terminal identifier.

Block S204: The message transferor judges whether any terminal identifier portability information is found. If no such information is found, the process is ended; otherwise, the process proceeds to Block S205.

Block S205: The message transferor adds terminal identifier portability information to the received message, and the process is ended.

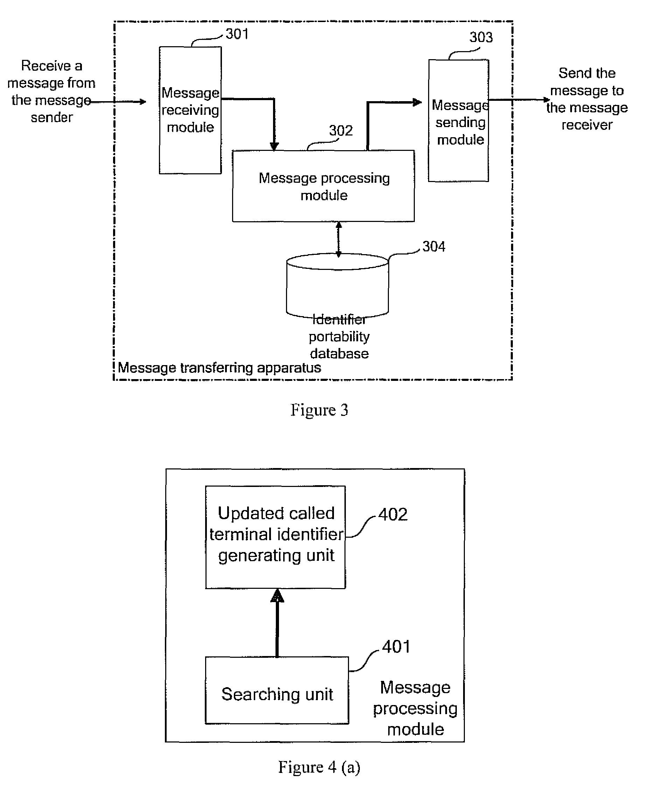

In one embodiment, the message transferor may use a message transferring apparatus shown in Figure 3. The message transferring apparatus may include:
a message receiving module 301, adapted to receive a message;
a message processing module 302, adapted to process the message received by the message receiving module 301, obtain the called terminal identifier in the message, search the identifier portability database 304 for the terminal identifier portability information according to the called terminal identifier, and add the terminal identifier portability information to the processed message; and
a message sending module 303, adapted to send out the message processed by the message processing module 302.

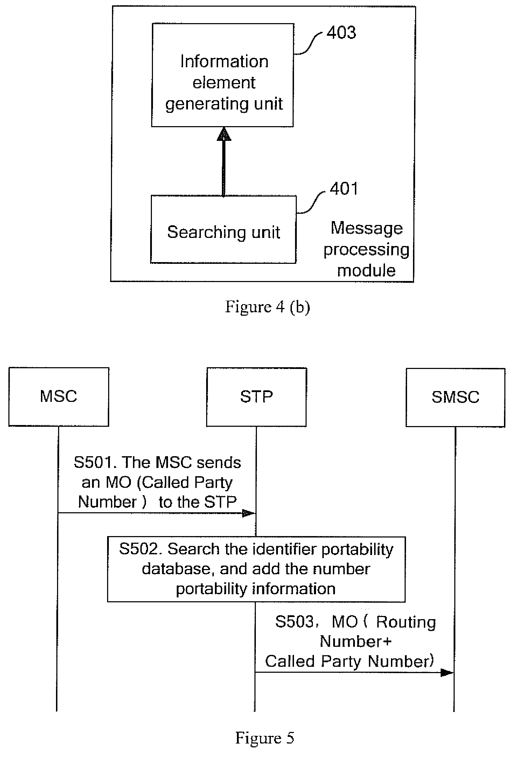

The message processing module 302 may add the terminal identifier portability information to the processed message in two modes: (i) One mode is to assemble the called terminal identifier in the processed message and the terminal identifier portability information found in the identifier portability database 304 into an updated called terminal identifier, and replace the called terminal identifier in the processed message with the updated called terminal identifier. As shown in Figure 4(a), the message processing module 302 may include: a searching unit 401 and an updated called terminal identifier generating unit 402. The searching unit 401 is adapted to search the identifier portability database 304 for the terminal identifier portability information according to the called terminal identifier in the message received by the message receiving module 301; the updated called terminal identifier generating unit 402 is adapted to generate the updated called terminal identifier by using the called terminal identifier and the terminal identifier portability information found by the searching unit 401, and replace the called terminal identifier in the received message with the updated called terminal identifier. (ii) The other mode is to add the terminal identifier portability information found in the identifier portability database 304 as an independent information element to the processed message. As shown in Figure 4(b), the message processing module 302 may include: a searching unit 401 and an information element generating unit 403. The searching unit 401 is adapted to search the identifier portability database 304 for the terminal identifier portability information according to the called terminal identifier in the message received by the message receiving module 301; the information element generating unit 403 is adapted to generate an independent information element according to the terminal identifier portability information found by the searching unit 401 and add the information element to the received message.

In one embodiment, the processing terminal identifier portability information method for the Short Message Service (SMS) is described, supposing the terminal identifier is a user number. As shown in Figure 5, the implementation process includes the following steps:

Step S501: The message sender sends a Mobile Original (MO) to the message transferor 102. The message sender may be equipment such as a Mobile Switching Center (MSC) or a fixed network switching center, and the message transferor may be equipment such as a Signal Transfer Point (STP) or a signaling gateway. This embodiment supposes that the message sender is an MSC and the message transferor is an STP.

Step S502: The message receiving module 301 of the message transferor receives the MO message. The searching unit 401 of the message processing module 302 searches the identifier portability database 304 for the number portability information (routing number) of the called party according to the called party number in the received message. The updated called terminal identifier generating unit 402 of the message processing module 302 adds the routing number as a prefix of the called party number to generate an updated called party number, and then replaces the called party number in the received message with the updated called party number.

Step S503: The message sending module 303 in the STP transfers the MO message to the message receiver, namely, Short Message Service Center (SMSC).

In step S502 of this embodiment, as an alternative practice, the message processing module 302 may include an information element generating unit 403 instead of the updated called terminal identifier generating unit 402. The information element generating unit 403 adds the routing number as an independent message parameter to the MO message. In both practices, the number portability information of the called party can be transferred to the SMSC.

The above embodiment is also applicable to other data services in addition to SMS for the purpose of supporting the number portability function.

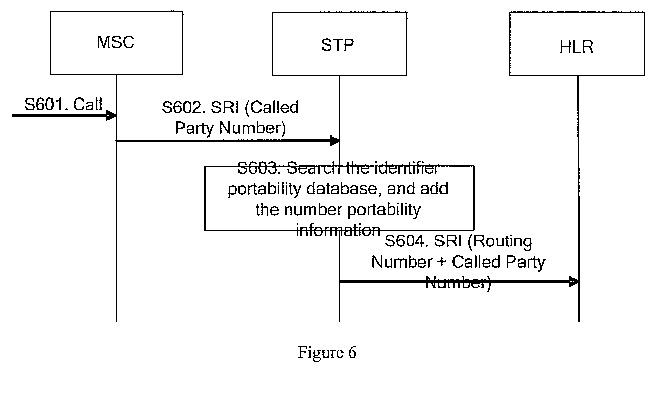

In one embodiment, the processing terminal identifier portability information method is applied to the voice call service. As shown in Figure 6, the implementation process includes the following steps:

Step S601: The message sender MSC receives a call setup request.

Step S602: The MSC sends a Send Routing Information (SRI) message to the message transferor STP, where the SRI message carries the called party number.

Step S603: The message receiving module 301 of the message transferor (such as the STP) receives the SRI message. The searching unit 401 of the message processing module 302 uses the called party number in the received message to search the NPDB for the number portability information (routing number) of the called party. The updated called terminal identifier generating unit 402 of the message processing module 302 adds the routing number as a prefix ahead of the called party number to generate an updated called party number, to replace the called party number in the received message.

Step S604: The message sending module 303 of the STP sends the SRI message to the message receiver, namely, Home Location Register (HLR).

In step S603 of this embodiment, as an alternative practice, the message processing module 302 of the STP may include an information element generating unit 403 instead of the updated called terminal identifier generating unit 402. The information element generating unit 403 adds the routing number as an independent message parameter to the SRI message. In both practices, the number portability information can be transferred to the HLR.

The above embodiment is also applicable to other voice services in the communication network in addition to the voice call service for the purpose of supporting the number portability function.

Through the method, apparatus and system for processing terminal identifier portability information in the communication network in an embodiment of the present invention, when the message transferor transfers a message between the message sender and the message receiver, the terminal identifier portability information is added to the transferred message directly, thus reducing the message interaction between the message transferor and the message receiver, reducing the performance overhead of the message transferor and message receiver, and improving the system efficiency.

Through the above embodiments, it is understandable to those skilled in the art that the embodiments of the present invention may be implemented through software and a necessary general hardware platform or through hardware only. However, in most cases, software and a general hardware platform are preferred. Based on such understandings, the technical solution of the present invention or contributions to the prior art can be embodied by software products. The software products are stored in a storage medium and incorporate several instructions to instruct a computer device, for example, a personal computer, a server, or a network device, to execute the method provided by each embodiment of the present invention.

The embodiments described above are only preferred embodiments, which are not intended to limit the scope of protection of the present invention. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for processing terminal identifier portability information in a communication network, comprising:
receiving a first message sent by a message sender, and
adding terminal identifier portability information to the first message to generate a second message when the first message carries a ported called terminal identifier, and sending the second message to a message receiver.

2. The method of claim 1, wherein adding the terminal identifier portability information to the first message comprises: generating, by a message transferor, an updated called terminal identifier according to the called terminal identifier in the first message and the terminal identifier portability information and replacing the called terminal identifier in the first message with the updated called terminal identifier.

3. The method of claim 1, wherein: adding the terminal identifier portability information to the first message comprises: generating, by a message transferor, an independent information, element according to the terminal identifier portability information and adding the information element to the first message.

4. The method of any of claims 1-3, wherein the terminal identifier portability information is a routing identifier for porting the called terminal identifier to a new home network.

5. An apparatus for processing terminal identifier portability information, comprising:
a message receiving module, adapted to receive a first message that carries a terminal identifier;
an identifier portability database, adapted to store a correspondence between a called terminal identifier and called terminal identifier portability information; and
a message processing module, adapted to search the identifier portability database for the terminal identifier portability information according to the called terminal identifier in the first message, and add the terminal identifier portability information to the first message to generate a second message; and
a message sending module, adapted to send the second message.

6. The apparatus of claim 5, wherein the message processing module comprises:
a searching unit, adapted to search the identifier portability database for the terminal identifier portability information according to the called terminal identifier in the first message; and
an updated called terminal identifier generating unit, adapted to generate an updated called terminal identifier according to the called terminal identifier in the first message and the terminal identifier portability information, and replace the called terminal identifier in the first message with the updated called terminal identifier to generate a second message.

7. The apparatus of claim 5, wherein the message processing module comprises:
a searching unit, adapted to search the identifier portability database for the terminal identifier portability information according to the called terminal identifier in the first message; and
an information element generating unit, adapted to: generate an independent information element according to the portability information of the called terminal identifier in the first message, and add the information element to the first message to generate a second message.

8. The apparatus of any of claims 5-7, wherein: the terminal identifier portability information is a routing identifier for porting the called terminal identifier to a new home network.

9. A system for processing terminal identifier portability information in a communication network, comprising:
a message transferring apparatus, adapted to receive a first message sent by a message sending apparatus, add terminal identifier portability information to the first message to generate a second message, and send the second message; and
a message receiving apparatus, adapted to receive the second message.

10. The system of claim 9, wherein the message transferring apparatus comprises:
a message receiving module, adapted to receive the first message;
an identifier portability database, adapted to store a correspondence between a called terminal identifier and called terminal identifier portability information; and
a searching unit, adapted to search the identifier portability database for the terminal identifier portability information according to the called terminal identifier in the first message;
an updated called terminal identifier generating unit, adapted to generate an updated called terminal identifier according to the called terminal identifier in the first message and the terminal identifier portability information, and replace the called terminal identifier in the first message with the updated called terminal identifier to generate a second message; and
a message sending module, adapted to send the second message.

11. The system of claim 9, wherein the message transferring apparatus comprises:
a message receiving module, adapted to receive the first message;
an identifier portability database, adapted to store a correspondence between a called terminal identifier and called terminal identifier portability information; and
a searching unit, adapted to search the terminal identifier portability database for the terminal identifier portability information according to the called terminal identifier in the first message;
an information element generating unit, adapted to generate an independent information element according to the called terminal identifier in the first message, and add the information element to the first message to generate a second message; and
a message sending module, adapted to send the second message.

12. The system of any of claims 9-11, wherein: the terminal identifier portability information is a routing identifier for porting the called terminal identifier to a new home network.
